# EUROPEAN PATENT SPECIFICATION

(11) **EP 3 126 194 B1**
(45) Date of publication and mention of the grant of the patent: **10.08.2022**
(21) Application number: 15716983.0
(22) Date of filing: 31.03.2015
(51) Int. Cl.: B60Q 1/52, B60Q 5/00

(54) **A WARNING SYSTEM FOR A VEHICLE AND A VEHICLE COMPRISING SUCH A WARNING SYSTEM**
WARNSYSTEM FÜR EIN FAHRZEUG UND FAHRZEUG MIT SOLCH EINEM WARNSYSTEM
SYSTÈME D'AVERTISSEMENT POUR VÉHICULE ET VÉHICULE COMPRENANT UN TEL SYSTÈME D'AVERTISSEMENT

(30) Priority: 04.04.2014 DK 201470174
(43) Date of publication of application: 08.02.2017
(73) Proprietor: Fairwood Innovation A/S, 5500 Middelfart (DK)
(72) Inventor: UHRENHOLT, Uffe, DK-5560 Aarup (DK)
(74) Representative: Patentgruppen A/S
(86) International application number: PCT/DK2015/050076
(87) International publication number: WO 2015/149813

(56) References cited:
- EP-A1- 2 543 542
- WO-A1-2010/036198
- US-A- 5 467 071
- US-A1- 2008 122 597
- US-A1- 2008 175 012
- US-A1- 2011 128 141
- US-A1- 2011 128 161
- US-A1- 2012 025 964
- US-A1- 2014 049 405

## Description

The present invention relates to a warning system to be mounted on a vehicle, such as a bus, for warning vulnerable road users, such as cyclists and pedestrians. Furthermore, the invention relates to a vehicle comprising such a warning system.

### Background of the invention

The problem of vulnerable road users being severely injured or even killed due to dangerous, but typical behaviour around vehicles, especially trucks and busses, is well-known.

One example is that persons exiting vehicles, especially passengers exiting a bus, at or near a cyclist path may collide with passing cyclists.

One known way of dealing with this problem is modify the cyclist path around the bus stop to allow passengers to exit at a platform between the road and the cyclist path. This does, however, not eliminate the problem.

Another problem, also especially relevant for passengers, especially children, exiting a bus is that they may cross the road while the bus is still at full stop in front of or behind the bus without looking for other moving vehicles.

Some warning systems and surveillance systems are known.

Document US 2011/0128161 A1 discloses a pedestrian warning system including a sensing device that is provided on the vehicle for detecting a pedestrian within a predetermined zone around the vehicle. It may include audible warning devices or visual warning devices.

Document US 5 467 071 A discloses an audiovisual safety warning kit for use with a bus comprising lighting for mounting to the vehicle to produce a visual safety warning and to illuminate the ground adjacent to the bus.

### Brief description of the invention

It is an object of the present invention to provide an improved and more efficient warning system than existing systems known in the art.

The invention relates to a warning system to be mounted on or incorporated in a a bus, for warning vulnerable road users, such as cyclists and pedestrians, said warning system comprising
one or more lights arranged to be mounted on or incorporated in
   - one side of the bus,
   - the front end of the bus,
   - the back end of the bus, or
   - any combination thereof
for illuminating at least a part of the surface of an area along the side of the bus, along the front of the bus, along the back of the vehicle, or any combination thereof, and
a control system arranged to switch the one or more lights on and off, respectively, in accordance with a set of predefined conditions,
wherein said one or more lights are arranged to define one or more zones on said at least a part of the surface illuminated by said one or more lights, said one or more zones being associated with a recommended behaviour for vulnerable road users.

One advantage of the invention may be that vulnerable road users, such as cyclists and pedestrians, are warned in potentially dangerous situations. This may then decrease the probability of the dangerous situations evolving into an accident.

One advantage of the invention may be that vulnerable road users, such as cyclists approaching the bus, and/or passengers about to enter or having exited the bus may be protected. Particularly, by signalling via the defined zones, a recommended behaviour to such vulnerable road users, and thus warning the vulnerable road users about violating the recommended, such vulnerable road users may be kept within and/or outside certain zones, e.g. within safe zones and/or outside forbidden zones. I.e. by keeping warning the vulnerable road users, such vulnerable road users may be kept away from or within the one or more zones, which may be associated with a danger or safety.

Particularly, one advantage of the invention may be that passengers exiting the bus are kept safe. Similarly, persons entering the bus, i.e. also persons about to enter the bus, may be kept safe.

In the context of the present invention, it should be understood that illuminating at least a part of the surface of an area may be understood as illuminating the whole of the area, or illuminating a part of the area, such as one or more lines within the area. The latter solution may often be preferred, since this typically gives the most effect visibility to the vulnerable road users for a given total amount of emitted light. Also, in some embodiments, the whole of an area may be illuminated with a certain intensity of light while certain parts, e.g. lines and/or pictographs, of that area may be illuminated with a higher intensity.

According to the invention, the warning system further comprises one or more lenses arranged between the one or more lights and the area to be illuminated to focus the light from the one or more lights in such a way that one or more lines or symbols are formed by the focused light on the area to be illuminated.

A warning system with the focusing lenses is advantageous in that illumination of an area, which a vulnerable road user is going to enter, is much more likely to catch the attention of the vulnerable road user than just another lighting or flashing device mounted on the side of a vehicle or on a post above or next to the road.

According to an embodiment, said at least a part of an area should be understood as one or more straight and/or curved lines within that area. Therefore, generally the indication(s) on the surface provided by the light of the warning system comprise one or more straight and/or curved lines.

One example of an advantageous warning system according to the invention may be a warning system in or on a bus adapted to warn cyclists about passengers exiting the bus. This may be particularly advantageous when the bus stops along or near a bicycle path. Normally, when a bus unloads passengers along a bicycle path a dangerous situation may arise if a passenger exits the bus through a door in the same moment as a cyclist passes the door. If the cyclist collides with the passenger, both may be hurt. Furthermore, in some countries at least some mopeds are allowed to drive on the cyclist path. Since these mopeds may typically have higher speed and weight than many cyclists, even more dangerous situations may arise. However, the warning system according to the invention may also be used to warn moped drivers, or even other users of bicycle paths, such as skater, runners, etc. Especially, by illuminating at least parts of areas next to the vehicle vulnerable road users, such as cyclists, moped drivers, and skaters, may be warned. It has been found to be especially effective to illuminate lines within the area, e.g. combined with a pictograph within that area.

Another example advantageous warning system according to the invention may be a warning system in or on a bus adapted to warn pedestrians, particularly passengers exiting a vehicle, such as a bus. Some pedestrians, especially children, may cross the road while the bus is standing still at the bus stop. This, however, may be rather dangerous, as the bus may limit the view of the pedestrian crossing the road in such a way that the pedestrian walks out in front of a moving car resulting in an accident. However, the warning system may be adapted to illuminate a safe zone next to the vehicle, e.g. on the sidewalk. As an alternative, or additionally, a danger zone may also be illuminated in the front of and/or behind the bus. Thereby, the pedestrians may be encouraged to stay at the side of the bus until the bus has left the bus stop and the view of the pedestrians is restored.

One advantage of the invention may be that vulnerable road users, such as pedestrians and cyclists may be warned against dangerous situations, and the vulnerable road users may therefore be significantly more likely to exhibit correct and/or risk-minimizing behaviour as a result of the use of the warning system according to the invention.

According to the invention, said warning system is adapted to warn vulnerable road users, said users comprising passengers entering or exiting the vehicle against other vehicles. According to an advantageous embodiment of the invention, said recommended behaviour comprises staying away from or within the associated one or more zones. One advantage of the above embodiment may be that vulnerable road users, such as cyclists approaching the vehicle, e.g. a bus, and/or passengers about to enter or having exited the bus may be protected. Particularly, by signalling via the defined zones, a recommended behaviour to such vulnerable road users, and thus warning the vulnerable road users about violating the recommended, such vulnerable road users may be kept within and/or outside certain zones, e.g. within safe zones and/or outside forbidden zones. I.e. by keeping warning the vulnerable road users, such vulnerable road users may be kept away from or within the one or more zones, which may be associated with a danger or safety.

According to an advantageous embodiment of the invention, at least one of said one or more lights are arranged to be mounted on or incorporated in one side of the bus for illuminating at least a part of the surface of an area along the side of the bus, so as to define a safe zone for passengers having exited or exiting the bus, and/or at least one of said one or more lights are arranged to be mounted on or incorporated in the front and/or back end of the bus for illuminating at least a part of the surface of an area along the front and/or back end of the bus, so as to define a forbidden zone for passengers having exited or exiting the bus and/or for cyclists approaching the bus.

One advantage of the above embodiment may be that vulnerable road users, such as cyclists approaching the bus, and/or passengers about to enter or having exited the bus may be protected. Particularly, by signalling via the defined zones, a recommended behaviour to such vulnerable road users, and thus warning the vulnerable road users about violating the recommended, such vulnerable road users may be kept within and/or outside certain zones, e.g. within safe zones and/or outside forbidden zones. I.e. by keeping warning the vulnerable road users, such vulnerable road users may be kept away from or within the one or more zones, which may be associated with a danger or safety.

According to an advantageous embodiment of the invention, said vulnerable road users comprises cyclists .

According to a preferred embodiment of the invention, said predefined conditions comprise status about one or more doors in said bus.

Preferably, according to an embodiment, the lights are activated by the status of one or more doors of the bus, which typically may have at least two or three doors for passengers, the bus driver activates a switch to open the doors or one or more selected doors. The opening of one or more of the doors may then activate the lights, or at least form a part of the predefined conditions.

In one embodiment not part of the invention, the lights are not switched off immediately after closing the doors, but are switched off after a predefined time delay and/or other predefined conditions, such as e.g. an increase in velocity, e.g. to above 5 km/h.

According to a preferred embodiment not part of the invention, said one or more lights are adapted to illuminate said at least a part of said surface with an effect of at least 500 W/m², preferably at least 750 W/m², more preferably at least 900 W/m², most preferably at least 1000 W/m².

According to other embodiments not part of the invention, said one or more lights are adapted to illuminate said at least a part of said surface with an even higher effect, such as at least 1250 W/m², 1500 W/m², or even 1750 W/m².

According to an embodiment not part of the invention, said one or more lights are adapted to illuminate said at least a part of said surface with an effect corresponding to at least 50 % of the effect corresponding to direct solar illumination, such as at 75 %, 90%, 100%, or even higher, such as 125% or 150%.

Preferably, according to an embodiment not part of the invention, illumination effects (energy per time) may be measured as the effect of visible light measured at ground level. According to an embodiment the effect of direct solar illumination may be taken as 1000 W/m².

According to a preferred embodiment of the invention, the set of predefined conditions include a condition that the one or more lights of the warning system can only be switched on when the velocity of the vehicle does not exceed 10 km/h, preferably 5 km/h, more preferably 2 km/h, 1 km/h.

One advantage of the above embodiment may be that the one or more lights are not switched on in situations, where other predefined conditions are fulfilled, but where it is the switching on or activation of the one or more lights is not intended. One example of such a situation may be the signalling a change of lane on a highway, where the switching on the lights is unwanted.

Furthermore, when a condition for switching on the lights is a relatively low velocity of the vehicle or even a full stop of the vehicle, the switching on of the one or more lights in unwanted situations may be limited or even avoided.

According to one embodiment not part of the invention, the vehicle must be brought to a total stand still before the one or more lights of the warning system can be switched on.

According to a preferred embodiment of the invention, the set of predefined conditions include a condition that the one or more lights of the warning system can only be switched on when the wheels are turned less than 20°, preferably less than 10°, more preferably less than 5°.

By said wheels being turned a given angle should be understood relative to a straight configuration, i.e. a configuration for which the vehicle would be driving straight. One advantage of the above embedment may be that switching on of the one or more lights is prevented when the vehicle, such as a bus, makes a relatively sharp turn, such as turning onto another road, but may still be switched on when stopping at the side of the road, which would typically also necessitate some degree of turning, even when stopping along a turning road.

According to a preferred embodiment not part of the invention, said warning system is powered by the bus.

One advantage of the above embodiment may be that no internal battery is needed, giving a less service requiring warning system.

According to an alternative embodiment not part of the invention, the warning system is powered by one or more batteries dedicated to the warning system.

According to a preferred embodiment not part of the invention, said one or more lights are powered by the bus.

One advantage of the above embodiment may be that no internal battery is needed, at least for the lights being the most power consuming part of the warning system, giving a less service requiring warning system.

According to a preferred embodiment not part of the invention, said warning system comprises at least 10 LEDs (Light Emitting Diodes), such as at least 20 LEDs, such as at least 30 LEDs, such as at least 40 LEDs, such as at least 50 LEDs.

According to further example embodiments not part of the invention, the warning system may comprise between 10 and 200 LEDs, such as between 50 and 200 LEDs. Also, in some embodiments, where the warning system comprises multiple light emitting elements, each element may comprise a number of LEDs as specified in any of the above embodiments.

One advantage of the above embodiment may be that a powerful illumination of the ground or surface may be performed with a relatively cost effective illumination system. The LEDs may be combined with a common lens, i.e. one lens used by all LEDs, an array of lenses and/or a common reflector or an array of reflectors.

According to a preferred embodiment not part of the invention, at least one of said one or more lights are arranged to be mounted on or incorporated in the vehicle in a height above ground no larger than 50 % of the height of the vehicle, such as no larger than 40 % of the height of the vehicle, such as no larger than 30 % of the height of the vehicle.

According to an embodiment not part of the invention, at least one of said one or more lights are arranged to be mounted on or incorporated in the vehicle in a height above ground no larger than 1.5 meters, preferably 1.0 meters.

According to a preferred embodiment not part of the invention, at least one of said one or more lights are arranged to be mounted on or incorporated in the vehicle so as to be able to illuminate an area on the ground within 10 meters from the vehicle, such as within 5 meters from the vehicle.

One advantage of the above embodiment may be that the light is kept relatively concentrated on the ground within the vicinity of the vehicle so as to warn vulnerable road users, without spreading the light too much and blinding these vulnerable road users by shining light in a direction of the eyes of these road users.

According to a preferred embodiment not part of the invention, said one or more lights are adapted to illuminate said surface with an effect that is adapted to ambient lightning conditions.

One advantage of the above embodiment may be that a more power efficient solution is obtained. For example, a relatively high output of optical light from the one or more lights is used only when necessary, e.g. due to a high level of ambient light, whereas the output from the one or more lights may be lower when the ambient level of light is lower thereby saving electrical power.

For instance, in some embodiments not part of the invention, the warning system may adapt the optical output effect to differentiate between day and night settings, i.e. a first day setting corresponding to present daylight to be exceeded, and a second night setting corresponding to no present daylight to be exceeded. In other words, the first day setting has requires a higher output from the one or more lights to exceed a higher level of ambient light. The switching between day and night settings may in some embodiments be controlled based on at least the time, whereas in other embodiments other inputs, such as a light sensor measuring the ambient light conditions, may be used. In some embodiments the level of light from the one or more lights may be controlled continuously based on the ambient level of light.

According to a preferred embodiment of the invention, at least one of said one or more lights are arranged to be mounted on or incorporated in one side of the bus for illuminating at least a part of the surface of an area along the side of the bus, so as to define a safe zone for passengers having exited or exiting the bus.

An advantage of the above embodiment may be that pedestrians, such as passengers exiting a bus, are encouraged to stay within the defined safe zone and therefore less likely to cross the road before the bus has driven away from the place of stopping. This in turn may reduce the risk of passengers being run down by a car when crossing the road before the bus has driven away from the place of stopping.

According to a preferred embodiment of the invention, at least one of said one or more lights are arranged to be mounted on or incorporated in the front and/or back end of the bus for illuminating at least a part of the surface of an area along the front and/or back end of the bus, so as to define a forbidden zone for passengers having exited or exiting the bus.

An advantage of the above embodiment may be that pedestrians, such as passengers exiting a bus, are encouraged to stay away from the defined forbidden zone (danger zone) and therefore less likely to cross the road before the bus has driven away from the place of stopping. This in turn may reduce the risk of passengers being run down by a car when crossing the road before the bus has driven away from the place of stopping.

According to a preferred embodiment of the invention, the set of predefined conditions include a condition that the one or more lights of the warning system can only be switched on when ordinary flashing indicator lamps of the bus on the same side thereof are activated, indicating that a driver of the bus intends to make a turn in that direction.

Preferably, in the above embodiment it should be understood that making a turn in a direction is understood as e.g. pulling over to the side of the road in order to make a stop there.

According to a preferred embodiment of the invention, the set of predefined conditions include a condition that the one or more lights of the warning system can only be switched on when the velocity of the vehicle does not exceed a predefined threshold velocity.

According to a preferred embodiment of the invention, the set of predefined conditions include a condition that the one or more lights of the warning system can only be switched on when the vehicle is in one of a number of predefined gears, such as for instance the first gear or the second gear.

It is advantageous if the warning system is not unnecessarily switched on when no turn of the vehicle is intended. Activation of the ordinary flashing indicator lamps, decrease of the velocity and shift into one of the lower gears are all indicators that a turn might be intended.

According to a preferred embodiment of the invention, the light from the one or more lights of the warning system is arranged to be able to flash at one or more predefined frequencies, for instance defined by a frequency range.

According to a preferred embodiment of the invention, the frequency, with which the light of the warning system flashes, is controlled to vary depending on one or more predefined criteria, such as for instance the velocity of the vehicle.

In an aspect of the invention, it relates to a bus, comprising a warning system according to any of the claims 1 -13.

According to a preferred embodiment of the invention, said predefined conditions are based on information retrieved from a communication system (COS) of said vehicle. Relevant information may thus e.g. be retrieved in an advantageous way, thereby retrieving one or more parameters such as e.g. vehicle speed related data, turn light (directional indicator) information, gear information, door opening activation, stopping signal activation, and/or the like that may be used in relation to the predefined conditions. Vehicles normally already have such a communication system incorporated, and thus, the warning system may more easily be implemented in/at a vehicle.

According to a preferred embodiment of the invention, said communication system comprises a vehicle bus system such as a system operating in accordance with a Controller Area Network (CAN) or a Local Interconnect Network (LIN) protocol. Such systems may be advantageous to collect information from, and may also be known as vehicle bus systems.

According to a preferred embodiment of the invention, said predefined conditions comprise information from one or more sensors configured for detecting persons.

Such sensors may help to provide enhanced safety and reliability of the warning system. Additionally, this may provide that the light is turned on when persons, such as cyclists, are present/detected near the vehicle, thereby providing that the light emitted from the warning system may easier be noticed by the person(s) detected by the sensor.

According to a preferred embodiment not part of the invention, said one or more sensors comprises an electric sensor such as a PIR sensor, an ultrasonic sensor and/or an optical sensor.

It should be understood in connection with the above that a PIR sensor is a passive infrared sensor.

The invention relates also to a method of warning vulnerable road users such as cyclists and pedestrians, said method being defined in claim 14.

### The figures

In the following, a few exemplary embodiments of the invention is described in more detail with reference to the figures, of which
- Fig. 1A: illustrates schematically the function of a warning system according to an embodiment of the invention,
- Fig. 1B: illustrates schematically the function of a warning system according to an embodiment of the invention,
- Fig. 2: illustrates schematically the composition of a warning device according to an embodiment of the invention
- Fig. 3: illustrates an embodiment of the invention where information from a communication system of a vehicle is used,
- Fig. 4: illustrates an embodiment of the invention where a sensor is used for detecting persons,
- Fig. 5: illustrates a flow chart according to embodiments of the invention,
- Fig. 6: illustrates an embodiment of the invention relating to using a plurality of light emitting elements for illuminating different surface areas, and
- Figs. 7-8: illustrates embodiments of the invention relating to a control system of the warning system.

### Detailed description of the invention

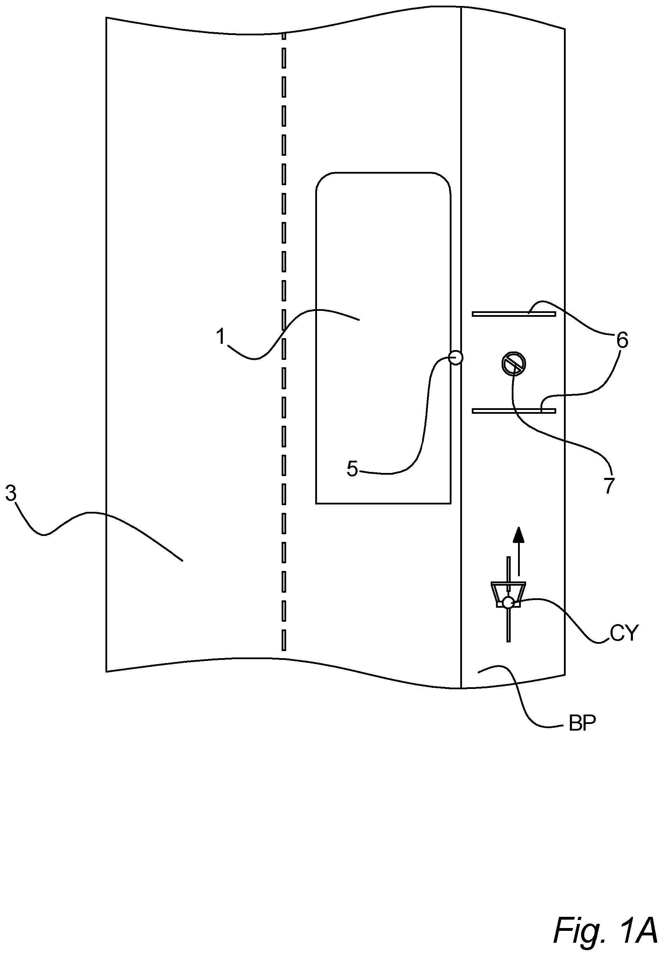

The arrangement and function of a warning system according to an embodiment of the invention is illustrated schematically in Fig. 1A, in which a vehicle 1 made a stop along the side of a road 3.

The vehicle 1, which according to the invention is a bus, has stopped on the side of a road 3, e.g. for passengers of the bus 1 to exit the bus. A cyclist CY is cycling on a bicycle path BP along the road 3, closing in on the position of the bus 1. Thereby, a potentially dangerous situation has arisen, as the cyclist CY may collide with passengers exiting the bus 1.

A warning device 5 is arranged on the right side of the vehicle 1, since the illustration shows a vehicle 1 pulled over to the right side of the road in a country with right-hand traffic. In countries with left-hand traffic, the warning device 5 may typically rather be arranged on the left side of the vehicle 1. According to this and similar embodiments, the warning device 5 is to be arranged either on side of the vehicle 1 opposite the driver's position 2, i.e. on the side of the vehicle 1 facing the nearest road side, bicycle path or pavement, e.g. on the front end of the vehicle 1, and/or on the back of the vehicle 1. The light emitted from the warning systems of the present invention is thus to be considered as separate to the conventional blinking (when activated by the driver) turn light of the vehicle, and the light to be transmitted from the light source of the warning system is preferably focused towards the surface area to be illuminated.

When activated, the warning device 5 emits light for illuminating at least a part of the surface area next to the vehicle 1. The illustrated embodiment of the warning device 5 further comprises means for focusing the emitted light so that a lines/curves 6 and a pictograph 7 appear on the illuminated area.

The pictograph 7 formed by focused light on the illuminated area functions as a warning signal to the vulnerable road user, such as the cyclist CY, not to enter the area, which is illuminated and/or encircled by the line/curve 6 formed by focused light. For instance, the pictograph 7 can be formed to resemble a well-known "No entry" road sign.

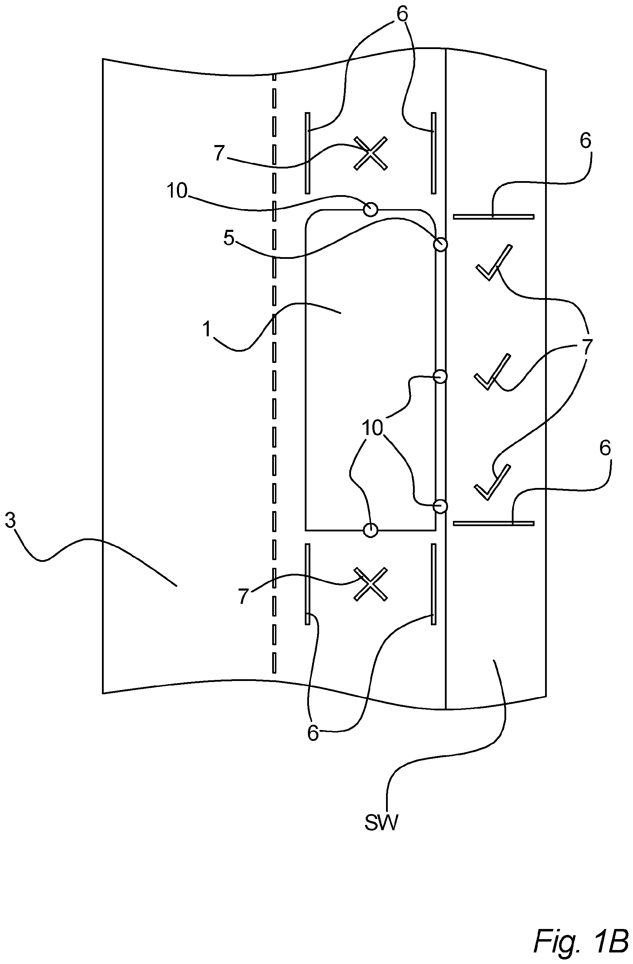

The arrangement and function of a warning system according to an embodiment of the invention is illustrated schematically in Fig. 1B, in which a vehicle 1 made a stop along the side of a road 3.

The vehicle 1, here shown as a bus, has made a stop along the side of a road 3. A warning system 5 installed in the side of the bus illuminates a part of a surface on the side of the bus, e.g. a part of a sidewalk SW or similar. The warning system 5 is here shown as installed in the right side of the bus near the front, but may be positioned elsewhere. Also, the warning system in the present embodiment is connected to a number of additional light emitting elements 10 for emitting light on the part of the area near the bus furthest away from the warning system 5. Thereby, the warning system 5 is adapted to control the illumination of a surface near the bus along the right side of the bus as well as in front of the bus and behind the bus.

The warning system 5 and additional light emitting elements 10 is shown to illuminate a part of the surface of the sidewalk SW. As in the embodiment illustrated on figure 1A, the warning system 5 of the present embodiment comprises means for focusing the emitted light so that a lines/curves 6 and pictographs 7 appear on the illuminated area. The lines 6 and pictographs 7 on the right side of the bus thereby defines a safe zone for pedestrians, such as passengers exiting the bus, in which the pedestrians should remain until the bus drives away from the stopping position. Furthermore, an area in front of the bus is illuminated with lines 6 and a pictograph 7 defining a forbidden zone or danger zone. Similarly, an area behind the bus is illuminated to define a forbidden zone or danger zone. The pictographs in the safe zone may preferably differ from the pictographs of the danger zones / forbidden zones, by using a positively perceived pictograph such as a check mark for the safe zone and a negatively perceived pictograph such as an X or no-entry sign for the danger zone / forbidden zone. Furthermore, the light of the safe zone may preferably be of a different color than the light of the danger zone / forbidden zone, e.g. with green and red for the safe zone and the danger zone / forbidden zone, respectively.

By defining a safe zone as described above, pedestrians, such as passengers exiting the bus, are encouraged positively to stay within the defined safe zone, and consequently, it is less likely that passengers may attempt to cross the road after exiting the bus before the bus has driven along.

By defining a danger zone / forbidden zone as described above, pedestrians, such as passengers exiting the bus, are encouraged to stay away from the defined danger zone / forbidden zone, and consequently, it is less likely that passengers may attempt to cross the road after exiting the bus before the bus has driven along.

It should be understood that in some embodiments, the warning system may illuminate only one side of the bus, an area in front the bus, an area behind the bus, or a combination of two of these.

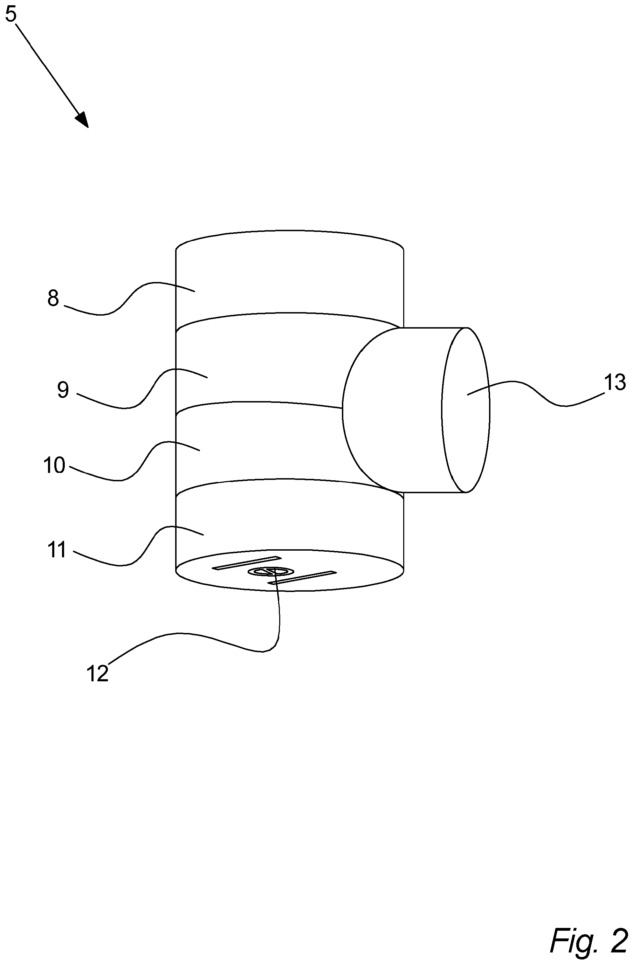

Fig. 2 illustrates schematically the composition of a warning device 5 according to an embodiment of the invention.

The primary parts of the warning device 5 are the light emitting element(s) 10 and the focusing lens 11.

Preferably, the light emitting element(s) consist(s) of one or more Light Emitting Diodes (LEDs), which are available in many types, sizes and colours, all of which are able to deliver a given light intensity with significantly lower energy consumption than other known electrical light emitting devices.

The focusing lens 11 comprises special features 12 so that lines/curves 6 and/or pictographs 7 like the ones shown in Fig. 1 are formed by focused light on the surface of the area being illuminated by the warning device 5.

The illustrated embodiment of the warning device 5 further comprises a number of further features, namely:
- An accelerometer 9 which, by measuring the changes in the velocity of the vehicle 1, can be used by a control system (not shown) to ensure that the warning system can only be activated when the vehicle 1 moves at a speed below a certain predefined limit to avoid activation of the system, for instance, when another vehicle is overtaken at high speed on a motorway. Furthermore, an accelerometer 9 may detect braking, acceleration, and turning, the detection of each of these may be used as one of the predefined conditions.
- A light meter 8 which, by measuring the luminosity of the area to be illuminated, can be used by a control system to adjust the intensity of the light emitted from the warning system so that energy may be saved in dark areas by decreasing the intensity, and visibility of the illumination may be obtained even in light areas by increasing the intensity of the emitted light.
- A preferably directional sounding body 13 arranged to be operated along with the one or more lights of the warning system to increase the likelihood of catching the attention of a vulnerable road user to be warned.

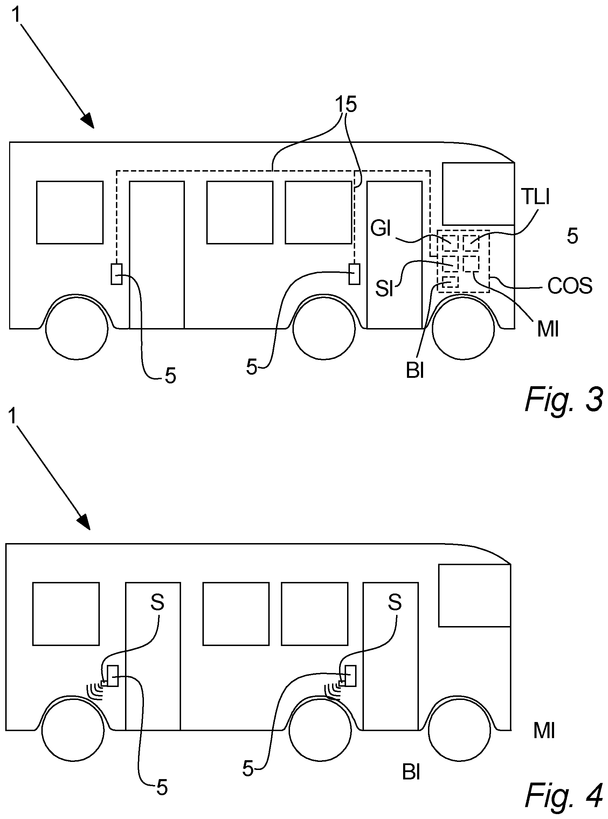

Fig. 3 illustrates an example of a vehicle 1 comprising the warning system (in this example the warning device 5) according to embodiments of the present invention where the warning system receives/retrieves information and/or commands from a communication system COS of the vehicle and the light of the warning system are controlled based thereon.

As previously explained, a control system may be arranged to switch the one or more lights on and off, respectively, in accordance with a set of predefined conditions.

Such predefined conditions may e.g. comprise one or more of the following conditions:
- that the one or more lights of the warning system can only be switched on when ordinary flashing indicator lamps of the vehicle on the same side thereof are activated, indicating that a driver of the vehicle intends make a stop along the side of the road in that direction,
- that that the one or more lights of the warning system can only be switched on when the velocity of the vehicle does not exceed a predefined threshold velocity,
- that the one or more lights of the warning system can only be switched on when the vehicle is in one of a number of predefined gears, such as for instance the first gear or the second gear,
- that the vehicle's motor is running,
- the opening mechanism of one or more doors, such as passenger doors in a bus, is activated,
- a stopping signal in a bus activated by a passenger intending to exit the bus at the next stop,
- that the one or more lights of the warning system can only be switched on when the wheels are turned less than 20°, preferably less than 10°, more preferably less than 5°,
- the warning system has been activated by the driver,
- if e.g. a brake system other than a hand brake is activated
- etc.

One or more of the above conditions may e.g. be referred to as conditions reflecting the operational status of the vehicle. These may be relevant in relation to determining if the vehicle is in an operational condition that fulfils criteria for pulling over to the side of the road on and/or off the light(s) of the warning system. Such information relating to the predefined conditions may be collected in different ways. For example, modern vehicles such as trucks and/or busses comprise a communication system COS which may provide such information. For example, vehicles such as busses, trucks and the like often comprise a communication system COS that interconnects components in the vehicle, this may also be referred to as a vehicle bus. Such may operate according to protocols such as Controller Area Network (CAN), Local Interconnect Network (LIN) and others.

The communication system COS may in embodiments of the invention thus be a part of an On-board diagnostics (OBD) means and relevant predefined conditions may thus in embodiments of the invention be based on OBD data. Such OBD means may refer to a self-diagnostic and reporting capability of the vehicle and may comprise relevant data that may be used for predefined conditions, e.g. vehicle speed, gear information, turn light status, door activation, stopping signals, motor status, motor revolution and/or the like.

A Controller Area Network may be considered as a message-based protocol, and may be considered as a vehicle bus standard designed to allow e.g. microcontrollers and/or other devices to communicate with each other in a vehicle, e.g. without a host computer.

The Local Interconnect Network may be considered as a serial network protocol used for communication between components in vehicles. This may comprise a Master and slaves where preferably all messages are initiated by the master with one or more slave(s) replying to a given message identifier. The master may however also act as a slave by replying to its own messages. The master is typically a microcontroller, whereas the slaves are implemented as ASICs. The LIN network may in embodiments be combined with sensors to e.g. create small networks. These subsystems may e.g. be connected by a back-bone-network or the like.

The predefined conditions reflecting the operational status of the vehicle may thus in embodiments of the invention be based on information retrieved from the communication system COS of the vehicle by suitable communication means 15. It is naturally to be understood that any suitable communication system COS of the vehicle 1 may provide relevant information relating to predefined conditions that may be used to determine whether the light of the warning system should be turned off or on. Such communications systems may continuously be updated with speed information SI relating to the speed of the vehicle, turn light status information TLI relating to if the driver has activated the turn signal, gear information GI regarding what gear the vehicle is in, motor information MI relating to if the vehicle's motor is running, brake information BI relating e.g. to if hand brakes are activated and/or other relevant conditions reflecting the operational status of the vehicle and which may be relevant in relation to operating the warning system's light.

In embodiments of the invention, the warning system may be considered as a part of the communication system COS of the vehicle. For example, the lights and/or other parts of the warning system may be considered as a slave of the communication system in the event that the system COS comprises a master/slave configuration.

In embodiments not part of the invention, the warning system may be retrofitted to an existing vehicle and may thus be considered as an add-on to an existing vehicle. In such embodiments, the warning system may also in embodiments of the invention be arranged to retrieve/receive information from a communication system COS of the vehicle. Alternatively, it may comprise its own determination means for determining e.g. speed of the vehicle, if directional indicators are switched on, if the doors are opening, in a bus if a stopping signal is activated, if a person is present nearby (e.g. by a sensor for detecting persons) and/or the like.

Hence, in embodiments not part of the invention, the warning system may be retrofitted to an existing vehicle by e.g. attaching the warning device 5 to the vehicle, and e.g. connect the device 5 to the communication system of the vehicle, so that it retrieves the relevant information/predefined conditions, and may act based thereon.

In an embodiment not part of the invention, the warning system may be provided to the vehicle during manufacturing of the vehicle, and may thereby so to say be incorporated as a part of the vehicle and e.g. be provided with information from a communication system COS or even be considered as part of the communication system of the vehicle 1 and e.g. based on information from a CAN system, LIN system and/or the like.

It is thus understood that the control system arranged to switch the one or more lights on and off in embodiments of the invention may be a part of the communication system COS of the vehicle, and that it may be provided by one or more data processor(s), data storage(s) and software of the vehicle communication system COS.

Also, it is understood that in embodiments of the invention, the control system arranged to switch the one or more lights on and off may be considered as separate to the communication system COS of the vehicle. The warning system may thus receive input parameters related to the predefined conditions from the communication system COS of the vehicles, process this information by a data processor and a suitable software code, and then control the one or more lights based thereon.

It is naturally understood that the accelerometer 9 disclosed in relation to fig. 2 in embodiments may be omitted and that relevant information thus instead may be provided by a communication system COS to e.g. ensure that the warning system may only be activated when the vehicle 1 moves at a speed below a certain predefined limit to avoid activation of the warning system, for instance, when another vehicle is overtaken at high speed on a motorway.

Other relevant predefined conditions may in embodiments of the invention relate to sensor input from one or more sensors S as illustrated in fig. 4. The sensor(s) S is/are configured for detecting persons that are in or near a surface area which is to be illuminated.

The one or more sensors may e.g. comprise an optic sensor, a camera combined with suitable software to detect persons, two-wheeled vehicles such as bicycles and scooters and/or the like, it may comprise a PIR (Passive Infrared Sensor), an ultrasonic sensor and/or the like.

The output from the sensor S may thus provide a condition for determining whether to turn on the light of the warning system or not. For example, if a person is detected, this may turn on the light. The sensor input may be combined with information from the communication system of the vehicle so that a person should be detected and e.g. the speed of the vehicle should be below a certain predefined speed, the vehicle should be in a predefined gear, the turn signal should be on and/or the like before turning on the light.

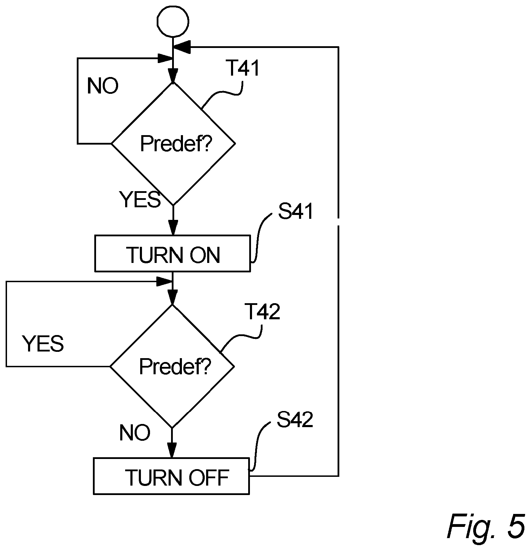

Fig 5 illustrates an embodiment of the operation of the warning system according to embodiments of the invention.

In test T41, it is tested whether the predefined conditions are complied with. This may relate to e.g. if the turn signal of the vehicle relating to the side of the vehicle comprising the light(s) of the warning system is activated or not, it may relate to the speed of the vehicle, the gear that the vehicle is in, sensor input relating to detecting of persons and/or the like.

If for example the turn signal is activated and the vehicle is moreover in the first, second or third gear (or any suitable number of gears dependent on the vehicle), and/or the speed of the vehicle is moreover below a predefined level, (e.g. determined based on information from a communication system COS of the vehicle (see above)) the conditions may be met, and the light of the system is turned on (step S41). When one or more of the conditions are not more fulfilled (test T42), the lights are turned off again, (step S42). The warning system may thus be turned on when the vehicle motor is turned on, a vehicle key is turned and/or the like.

In embodiments not part of the invention, the warning system may be supplied with electric power from the vehicles electric system such as a battery of the vehicle. It may however also in other embodiments be supplied with electric power from its own power source, e.g. a battery external to the battery of the vehicle.

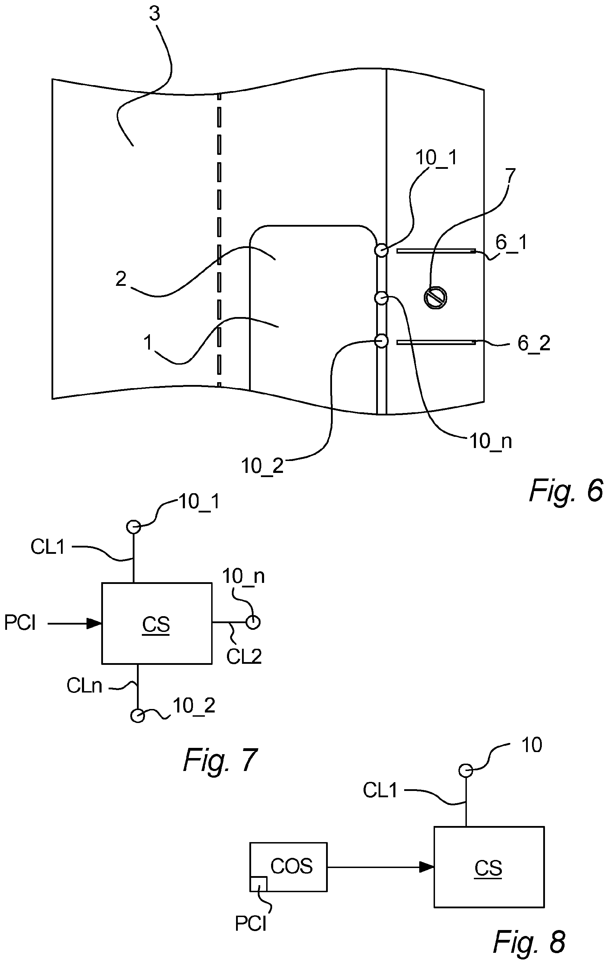

Fig. 6 illustrates a warning system comprising divided light sources for providing light to different areas, preferably simultaneously, dependent on the predefined conditions.

In this example, the warning system comprises a plurality of light sources configured for lighting up different parts of the area which together provides information of a danger zone of the vehicle 1. A first light emitting element 10_1 of e.g. a first device provides a first indication 6_1 on the area such as a road, bicycle track, sidewalk, or the like.

This first indication 6_1, in the present example a line but it may also be any other suitable indication, indicates a first front border for a dangerous zone, such as the area near a door of the bus where passengers of the bus may exit.

A second light emitting element 10_2 of e.g. a second device provides a second indication 6_2 on the area such as a road, bicycle track, sidewalk, or the like. This second indication 6_2 is placed behind the first indication 6_1 at a location behind the front of the vehicle). This indication provides a second indication for indicating the rearmost part of the dangerous zone.

A third light emitting element 10_n may then provide a further indication such as e.g. a pictograph 7 and/or the like.

The light emitting elements may thus at least comprise a light source (e.g. comprising one or more LEDs or the like) and in embodiments also one or more lenses for focusing the light.

Generally, it is to be understood that the indication(s) 6, 6_1, 6_2 in embodiments of the invention may be arranged to indicate a dangerous zone that may be larger than the area just in front of the door(s) of the vehicle. In other embodiments, the indication(s) may substantially correspond to the area just in front of the door(s) of the vehicle.

Also, the light emitting elements 10_1-10_n may be arranged at different locations along the vehicle 1 to provide the different indications 6_1, 6 2, 6_n.

Fig. 7 illustrates a schematic view of a warning system according to embodiments of the invention. the warning system comprises light emitting elements 10_1-10 n to be mounted on or incorporated in a vehicle, here shown on the side near the front end thereof for illuminating at least a part of the surface of an area along the side and/or the front of the vehicle and a control system CS arranged to switch the one or more lights on and off, respectively, in accordance with a set of predefined conditions.

The control system CS is provided with information predefined conditions information PCI that is used to determine whether to switch the one or more lights on or off, e.g. as explained above. The control system CS provides control signals to the light emitting elements by communication lines CLI-CLn based on the processing of the predefined input information.

The light emitting elements 10_1-10_n (which each may comprise one or more LEDs or other types of light emitting devices) may hence in embodiments be arranged to light up each their area related to a danger zone, such as an area in front of one or more doors of a bus.

In an embodiment, the warning system may comprise one light emitting element for providing light to the area related to a danger zone, such as an area in front of a door of a bus. In other embodiments, the warning system may comprise a plurality of light emitting elements configured for lightning up different surface areas, and these together may provide an indication of the danger zone, e.g. as described in relation to figs. 6 and 7. These light emitting elements may preferably be turned on and/or off substantially simultaneously. Moreover, in still other embodiments, a vehicle 1, especially a bus, may have several doors with corresponding danger zones, each of these being illuminated by one common warning system connected to multiple light emitting elements, or, alternatively, by separate warning systems for each danger zone.

Thus, it is understood that the warning system may comprise any suitable number of light emitting elements, e.g. one light emitting element, two light emitting elements, three light emitting elements or even more light emitting elements, each of which may comprising one or more light emitting devices such as an LED or the like. Each light emitting element may also comprise one or more lenses arranged between the one or more light emitting devices and the area to be illuminated to focus the light from the one or more lights in such a way that e.g. one or more lines or symbols are formed by the focused light on the surface area to be illuminated and/or the like.

The control system CS of the warning system (and in embodiments of the invention also the light sources) may in embodiments of the invention be a part of a communication system COS of the vehicle, see e.g. above in relation to fig. 3. The predefined condition information may thus be retrieved from this communication system COS.

The control system CS may in embodiments of the invention be separate to the communication system COS of the vehicle, but may still retrieve predefined criteria information from a control system of the vehicle as illustrated in fig. 7. The control system may thus comprise software, data storage, data processor(s) and the like for controlling the light source(s) based on the predefined condition(s).

### List of figure references

1. Vehicle
2. Driver's position in vehicle
3. Road
5. Warning device
6. Line/curve formed by focused light on illuminated area
7. Pictograph formed by focused light on illuminated area
8. Light meter
9. Accelerometer
10. Light emitting element(s)
11. Focusing lens
12. Special features on focusing lens for obtaining lines and/or pictograph(s)
13. Sounding body
15. Communication means
COS. Communication system of vehicle
S. Sensor
CL. Communication line
SW. Sidewalk
CY. Cyclist
BP. Bicycle path

## Claims

1. A warning system (5) to be mounted on or incorporated in a bus (1) for warning vulnerable road users, said warning system (5) comprising
one or more lights (10) arranged to be mounted on or incorporated in
- one side of the bus (1),
- the front end of the bus (1),
- the back end of the bus (1), or
- any combination thereof
for illuminating at least a part of the surface of an area along the side of the bus (1), along the front of the bus (1), along the back of the bus (1), or any combination thereof, and
a control system arranged to switch the one or more lights (10) on and off, respectively, in accordance with a set of predefined conditions,
wherein said one or more lights (10) are arranged to define one or more zones on said at least a part of the surface illuminated by said one or more lights (10), said one or more zones being associated with a recommended behaviour for vulnerable road users,
wherein the vulnerable road users comprise passengers entering or exiting the bus (1),
**characterized in that**
the system further comprises one or more lenses (11) arranged between the one or more lights (10) and the area to be illuminated, the one or more lenses (11) being arranged to form one or more lines (6) on the area to be illuminated, which one or more lines (6) indicate the periphery of the area designated a safe zone and/or a danger zone.

2. A warning system (5) according to claim 1, wherein said recommended behaviour comprises staying away from or within the associated one or more zones.

3. A warning system (5) according to claim 1 or 2,
wherein at least one of said one or more lights (10) are arranged to be mounted on or incorporated in one side of the bus (1) for illuminating at least a part of the surface of an area along the side of the bus (1), so as to define a safe zone for passengers having exited or exiting the bus (1), and/or
wherein at least one of said one or more lights (10) are arranged to be mounted on or incorporated in the front and/or back end of the bus (1) for illuminating at least a part of the surface of an area along the front and/or back end of the bus (1), so as to define a forbidden zone for passengers having exited or exiting the bus (1) and/or for cyclists (CY) approaching the bus (1).

4. A warning system (5) according to any of the preceding claims, wherein said vulnerable road users comprises cyclists (CY).

5. A warning system (5) according to any of the preceding claims, wherein said predefined conditions comprise status about one or more doors in said bus.

6. The warning system (5) according to any of the preceding claims, wherein the set of predefined conditions include a condition that the one or more lights of the warning system (5) can only be switched on when the wheels are turned less than 20°, preferably less than 10°, more preferably less than 5°.

7. The warning system (5) according to any of the preceding claims, wherein the set of predefined conditions include a condition that the one or more lights (10) of the warning system (5) can only be switched on when ordinary flashing indicator lamps of the bus (1) on the same side thereof are activated, indicating that a driver of the bus (1) intends to make a turn in that direction.

8. The warning system (5) according to any of the preceding claims, wherein the set of predefined conditions include a condition that the one or more lights (10) of the warning system (5) can only be switched on when the velocity of the bus (1) does not exceed a predefined threshold velocity.

9. The warning system (5) according to any of the preceding claims, wherein the set of predefined conditions include a condition that the one or more lights (10) of the warning system (5) can only be switched on when the bus (1) is in one of a number of predefined gears, such as for instance the first gear or the second gear.

10. The warning system (5) according to any of the preceding claims, wherein the light from the one or more lights (10) of the warning system (5) is arranged to be able to flash at one or more predefined frequencies, for instance defined by a frequency range, wherein the frequency, with which the light of the warning system (5) flashes, is optionally controlled to vary depending on one or more predefined criteria, such as for instance the velocity of the bus (1).

11. The warning system (5) according to any of the preceding claims, wherein said predefined conditions are based on information retrieved from a communication system (COS) of said bus (1).

12. The warning system (5) according to any of the preceding claims, wherein said predefined conditions comprise information from one or more sensors (S) configured for detecting persons.

13. A bus (1) comprising a warning system (5) according to any of the preceding claims.

14. A method of warning vulnerable road users, said method comprising:
mounting or incorporating a warning system (5) on or in a bus said warning system (5) comprising one or more lights (10) mounted on or incorporated in
- one side of the bus (1),
- the front end of the bus (1),
- the back end of the bus (1), or
- any combination thereof
for illuminating at least a part of the surface of an area along the side of the bus (1), along the front of the bus (1), along the back of the bus (1), or any combination thereof, and
by means of said control system switching the one or more lights (10) on and off, respectively, in accordance with a set of predefined conditions,
wherein said one or more lights (10) are arranged to define one or more zones on said at least a part of the surface illuminated by said one or more lights (10), said one or more zones being associated with a recommended behaviour for vulnerable road users,
wherein the vulnerable road users comprise passengers entering or exiting the bus (1), and
wherein the system further comprises one or more lenses (11) arranged between the one or more lights (10) and the area to be illuminated, the one or more lenses (10) being arranged to form one or more lines (6) on the area to be illuminated, which one or more lines (6) indicate the periphery of the area designated a safe zone and/or a danger zone.

## Patentansprüche

1. Warnsystem (5), das, zum Warnen ungeschützter Verkehrsteilnehmer, an einem Bus (1) zu montieren oder darin zu integrieren ist, wobei das Warnsystem (5) umfasst eine oder mehrere Leuchten (10), die so angeordnet sind, dass sie zu montieren sind an oder integrieren sind in
- einer Seite des Busses (1),
- dem vorderen Ende des Busses (1),
- dem hinteren Ende des Busses (1) oder
- einer beliebigen Kombination davon
zum Beleuchten mindestens eines Teils der Oberfläche eines Bereichs entlang der Seite des Busses (1), entlang der Vorderseite des Busses (1), entlang der Rückseite des Busses (1) oder einer beliebigen Kombination davon und
ein Steuersystem, das so angeordnet ist, dass es die eine oder mehreren Leuchten (10) ein- bzw. ausschaltet,
gemäß einer Reihe vordefinierter Bedingungen,
wobei die eine oder mehreren Leuchten (10) so angeordnet sind, dass sie eine oder mehrere Zonen auf
dem zumindest einen Teil der Oberfläche definieren, die von der einen oder mehreren Leuchten (10) beleuchtet wird, wobei die eine oder mehreren Zonen einem empfohlenen Verhalten für ungeschützte Verkehrsteilnehmer zugeordnet sind, wobei die ungeschützten Verkehrsteilnehmer Fahrgäste umfassen, die in den Bus (1) einsteigen oder aus ihm aussteigen, **dadurch gekennzeichnet, dass** das System ferner eine oder mehrere Linsen (11) umfasst, die zwischen der einen oder den mehreren Leuchten (10) und dem zu beleuchtenden Bereich angeordnet sind, wobei die eine oder mehreren Linsen (11) so angeordnet sind, dass sie eine oder mehrere Linien (6) auf dem zu beleuchtenden Bereich bilden, wobei eine oder mehrere Linien (6) den Umfang des Bereichs anzeigen, der als eine Sicherheitszone und/oder eine Gefahrenzone bestimmt wird.

2. Warnsystem (5) nach Anspruch 1, wobei das empfohlene Verhalten umfasst, sich von der zugeordneten einen oder den zugeordneten mehreren Zonen fernzuhalten oder sich innerhalb dieser aufzuhalten.

3. Warnsystem (5) nach Anspruch 1 oder 2,
wobei mindestens eine der einen oder mehreren Leuchten (10) so angeordnet ist, dass sie an einer Seite des Busses (1) zu montieren oder darin zu integrieren ist zum Beleuchten mindestens eines Teils der Oberfläche eines Bereichs entlang der Seite des Busses (1), um eine Sicherheitszone für Fahrgäste zu definieren, die aus dem Bus (1) ausgestiegen sind oder aussteigen, und/oder wobei mindestens eine der einen oder mehreren Leuchten (10) so angeordnet ist, dass sie an dem vorderen und/oder hinteren Ende des Busses (1) zu montieren oder darin zu integrieren ist zum Beleuchten mindestens eines Teils der Oberfläche eines Bereichs entlang des vorderen und/oder hinteren Endes des Busses (1), um so eine verbotene Zone für Fahrgäste, die aus dem Bus (1) ausgestiegen sind oder aussteigen, und/oder für Radfahrer (CY), die sich dem Bus (1) nähern, zu definieren.

4. Warnsystem (5) nach einem der vorhergehenden Ansprüche, wobei die ungeschützten Verkehrsteilnehmer Radfahrer (CY) umfassen.

5. Warnsystem (5) nach einem der vorhergehenden Ansprüche, wobei die vordefinierten Bedingungen einen Status einer oder mehrerer Türen in dem Bus umfassen.

6. Warnsystem (5) nach einem der vorhergehenden Ansprüche, wobei die Reihe vordefinierter Bedingungen eine Bedingung enthält, dass die eine oder mehreren Leuchten des Warnsystems (5) nur eingeschaltet werden können, wenn die Räder um weniger als 20°, vorzugsweise weniger als 10°, besonders bevorzugt weniger als 5° eingeschlagen sind.

7. Warnsystem (5) nach einem der vorhergehenden Ansprüche, wobei die Reihe vordefinierter Bedingungen eine Bedingung enthält, dass die eine oder mehreren Leuchten (10) des Warnsystems (5) nur eingeschaltet werden können, wenn gewöhnliche blinkende Anzeigeleuchten des Busses (1) auf derselben Seite davon aktiviert werden, wobei angezeigt wird, dass ein Fahrer des Busses (1) beabsichtigt, in diese Richtung abzubiegen.

8. Warnsystem (5) nach einem der vorhergehenden Ansprüche, wobei die Reihe vordefinierter Bedingungen eine Bedingung enthält, dass die eine oder mehreren Leuchten (10) des Warnsystems (5) nur eingeschaltet werden können, wenn die Geschwindigkeit des Busses (1) eine vordefinierte Schwellengeschwindigkeit nicht überschreitet.

9. Warnsystem (5) nach einem der vorhergehenden Ansprüche, wobei die Reihe vordefinierter Bedingungen eine Bedingung enthält, dass die eine oder mehreren Leuchten (10) des Warnsystems (5) nur eingeschaltet werden können, wenn sich der Bus (1) in einem von einer Anzahl vordefinierter Gänge, wie etwa dem ersten Gang oder dem zweiten Gang, befindet.

10. Warnsystem (5) nach einem der vorhergehenden Ansprüche, wobei das Licht von der einen oder den mehreren Leuchten (10) des Warnsystems (5) so angeordnet ist, dass es in der Lage ist, mit einer oder mehreren vordefinierten Frequenzen zu blinken, beispielsweise definiert durch einen Frequenzbereich, wobei die Frequenz, mit der das Licht des Warnsystems (5) blinkt, optional so gesteuert wird, dass sie abhängig von einem oder mehreren vordefinierten Kriterien, wie beispielsweise der Geschwindigkeit des Busses (1), variiert.

11. Warnsystem (5) nach einem der vorhergehenden Ansprüche, wobei die vordefinierten Bedingungen auf Informationen basieren, die von einem Kommunikationssystem (COS) des Busses (1) abgerufen werden.

12. Warnsystem (5) nach einem der vorhergehenden Ansprüche, wobei die vordefinierten Bedingungen Informationen von einem oder mehreren Sensoren (S) umfassen, die zum Erfassen von Personen konfiguriert sind.

13. Bus (1), umfassend ein Warnsystem (5) nach einem der vorhergehenden Ansprüche.

14. Verfahren zum Warnen ungeschützter Verkehrsteilnehmer, wobei das Verfahren umfasst:
Montieren oder Integrieren eines Warnsystems (5) an oder in einem Bus, wobei das Warnsystem (5) eine oder mehrere Leuchten (10) umfasst, die montiert sind an oder integriert sind in
- einer Seite des Busses (1),
- dem vorderen Ende des Busses (1),
- dem hinteren Ende des Busses (1) oder
- einer beliebigen Kombination davon,
zum Beleuchten mindestens eines Teils der Oberfläche eines Bereichs entlang der Seite des Busses (1), entlang der Vorderseite des Busses (1), entlang der Rückseite des Busses (1) oder einer beliebigen Kombination davon und
durch das Steuersystem Ein- bzw. Ausschalten der einen oder mehreren Leuchten (10), gemäß einer Reihe von vordefinierten Bedingungen,
wobei die eine oder mehreren Leuchten (10) so angeordnet sind, dass sie eine oder mehrere Zonen auf
dem zumindest einem Teil der Oberfläche definieren, die von der einen oder mehreren Leuchten (10) beleuchtet wird, wobei die eine oder mehreren Zonen einem empfohlenen Verhalten für ungeschützte Verkehrsteilnehmer zugeordnet sind, wobei die ungeschützten Verkehrsteilnehmer Fahrgäste umfassen, die in den Bus (1) einsteigen oder aus ihm aussteigen, und wobei das System ferner eine oder mehrere Linsen (11) umfasst, die zwischen der einen oder den mehreren Leuchten (10) und dem zu beleuchtenden Bereich angeordnet sind, wobei die eine oder mehreren Linsen (10) so angeordnet sind, dass sie eine oder mehrere Linien (6) auf dem zu beleuchtenden Bereich bilden, wobei eine oder mehrere Linien (6) den Umfang des Bereichs anzeigen, der als eine Sicherheitszone und/oder eine Gefahrenzone bestimmt wird.

## Revendications

1. Système d'avertissement (5) destiné à être monté sur ou incorporé dans un bus (1) pour avertir les usagers de la route vulnérables, ledit système d'avertissement (5) comprenant
une ou plusieurs lumières (10) agencées pour être montées sur ou incorporées dans
- un côté du bus (1),
- l'extrémité avant du bus (1),
- l'extrémité arrière du bus (1), ou
- toute combinaison de ceux-ci
pour éclairer au moins une partie de la surface d'une zone le long du côté du bus (1), le long de l'avant du bus (1), le long de l'arrière du bus (1), ou toute combinaison de ceux-ci, et
un système de commande agencé pour allumer et éteindre la ou les lumières (10), respectivement, en fonction d'un ensemble de conditions prédéfinies,
lesdites une ou plusieurs lumières (10) étant agencées pour définir une ou plusieurs zones sur
ladite au moins une partie de la surface éclairée par lesdites une ou plusieurs lumières (10), lesdites une ou plusieurs zones étant associées à un comportement recommandé pour les usagers de la route vulnérables,
lesdits usagers de la route vulnérables comprenant des passagers entrant ou sortant du bus (1),
**caractérisé en ce que** le système comprend en outre une ou plusieurs lentilles (11) agencées entre lesdites une ou plusieurs lumières (10) et la zone à éclairer, lesdites une ou plusieurs lentilles (11) étant agencées pour former une ou plusieurs lignes (6) sur la zone à éclairer, lesquelles une ou plusieurs lignes (6) indiquant la périphérie de la zone désignée zone de sécurité et/ou zone de danger.

2. Système d'avertissement (5) selon la revendication 1, ledit comportement recommandé comprenant le fait de rester à l'écart de ou à l'intérieur desdites une ou plusieurs zones associées.

3. Système d'avertissement (5) selon la revendication 1 ou 2,
au moins l'une desdites une ou plusieurs lumières (10) étant agencée pour être montée sur ou incorporée dans un côté du bus (1) pour éclairer au moins une partie de la surface d'une zone le long du côté du bus (1), de manière à définir une zone de sécurité pour les passagers étant sortis ou sortant du bus (1), et/ou
au moins l'une desdites une ou plusieurs lumières (10) étant agencée pour être montée sur ou incorporée dans l'extrémité avant et/ou arrière du bus (1) pour éclairer au moins une partie de la surface d'une zone le long de l'extrémité avant et/ou arrière du bus (1), de manière à définir une zone interdite aux passagers étant sortis ou sortant du bus (1) et/ou aux cyclistes (CY) s'approchant du bus (1).

4. Système d'avertissement (5) selon l'une quelconque des revendications précédentes, lesdits usagers de la route vulnérables comprenant des cyclistes (CY).

5. Système d'avertissement (5) selon l'une quelconque des revendications précédentes, lesdites conditions prédéfinies comprenant l'état d'une ou plusieurs portes dans ledit bus.

6. Système d'avertissement (5) selon l'une quelconque des revendications précédentes, l'ensemble de conditions prédéfinies comprenant une condition selon laquelle lesdites une ou plusieurs lumières du système d'avertissement (5) ne peuvent être allumées que lorsque les roues sont tournées à moins de 20°, de préférence à moins de 10°, plus préférablement à moins de 5°.

7. Système d'avertissement (5) selon l'une quelconque des revendications précédentes, ledit ensemble de conditions prédéfinies comprenant une condition selon laquelle lesdites une ou plusieurs lumières (10) du système d'avertissement (5) ne peuvent être allumées que lorsque des voyants lumineux clignotants ordinaires du bus (1) du même côté de celui-ci sont activés, indiquant que le conducteur du bus (1) a l'intention de faire un virage dans cette direction.

8. Système d'avertissement (5) selon l'une quelconque des revendications précédentes, ledit ensemble de conditions prédéfinies comprenant une condition selon laquelle lesdites une ou plusieurs lumières (10) du système d'avertissement (5) ne peuvent être allumées que lorsque la vitesse du bus (1) ne dépasse pas une vitesse seuil prédéfinie.

9. Système d'avertissement (5) selon l'une quelconque des revendications précédentes, ledit ensemble de conditions prédéfinies comprenant une condition selon laquelle lesdites une ou plusieurs lumières (10) du système d'avertissement (5) ne peuvent être allumées que lorsque le bus (1) est à l'un d'un certain numéro de vitesses prédéfinies, comme par exemple la première vitesse ou la deuxième vitesse.

10. Système d'avertissement (5) selon l'une quelconque des revendications précédentes, la lumière provenant desdites une ou plusieurs lumières (10) du système d'avertissement (5) étant agencée pour pouvoir clignoter à une ou plusieurs fréquences prédéfinies, par exemple définies par une plage de fréquence, la fréquence avec laquelle la lumière du système d'avertissement (5) clignote étant éventuellement commandée pour varier en fonction d'un ou plusieurs critères prédéfinis, comme par exemple la vitesse du bus (1).

11. Système d'avertissement (5) selon l'une quelconque des revendications précédentes, lesdites conditions prédéfinies étant basées sur des informations extraites d'un système de communication (COS) dudit bus (1).

12. Système d'avertissement (5) selon l'une quelconque des revendications précédentes, lesdites conditions prédéfinies comprenant des informations provenant d'un ou plusieurs capteurs (S) configurés pour détecter des personnes.

13. Bus (1) comprenant un système d'avertissement (5) selon l'une quelconque des revendications précédentes.

14. Procédé d'avertissement d'usagers de la route vulnérables, ledit procédé comprenant :
le montage ou l'incorporation d'un système d'avertissement (5) sur ou dans un bus, ledit système d'avertissement (5) comprenant une ou plusieurs lumières (10) montées sur ou incorporées dans
- un côté du bus (1),
- l'extrémité avant du bus (1),
- l'extrémité arrière du bus (1), ou
- toute combinaison de ceux-ci
pour éclairer au moins une partie de la surface d'une zone le long du côté du bus (1), le long de l'avant du bus (1), le long de l'arrière du bus (1), ou toute combinaison de ceux-ci, et
au moyen dudit système de commande allumant et éteignant lesdites une ou plusieurs lumières (10) respectivement, en fonction d'un ensemble de conditions prédéfinies, lesdites une ou plusieurs lumières (10) étant agencées pour définir une ou plusieurs zones sur ladite au moins une partie de la surface éclairée par lesdites une ou plusieurs lumières (10), lesdites une ou plusieurs zones étant associées à un comportement recommandé pour les usagers de la route vulnérables,
lesdits usagers de la route vulnérables comprenant les passagers entrant ou sortant du bus (1), et
ledit système comprenant en outre une ou plusieurs lentilles (11) agencées entre lesdites une ou plusieurs lumières (10) et la zone à éclairer, lesdites une ou plusieurs lentilles (10) étant agencées pour former une ou plusieurs lignes (6) sur la zone à éclairer, lesquelles une ou plusieurs lignes (6) indiquant la périphérie de la zone désignée zone de sécurité et/ou zone de danger.
